# EUROPEAN PATENT APPLICATION

(11) **EP 2 037 629 A1**
(43) Date of publication of application: **18.03.2009**
(21) Application number: 06767834.2
(22) Date of filing: 04.07.2006
(51) Int. Cl.: H04L 12/28

(54) **COMMUNICATION APPARATUS, AND METHOD AND PROGRAM FOR CONTROLLING SWITCHING OF CONNECTION DESTINATIONS OF WIRELESS COMMUNICATION APPARATUS BY USE OF COMMUNICATION APPARATUS**

(71) Applicant: FUJITSU LIMITED, Kawasaki-shi, Kanagawa 211-8588 (JP)
(72) Inventor: KOGA, Kifumi, Kawasaki-shi Kanagawa 211-8588 (JP)
(74) Representative: Weihs, Bruno Konrad
(86) International application number: PCT/JP2006/313317
(87) International publication number: WO 2008/004279

(57) **Abstract**

To reduce the decline of the quality of the communications and the occurrence of the interruption of the communications, which are caused when a wireless communication device switches over a communication device. A communication device includes an authenticating unit authenticating a wireless communication device, depending on whether predetermined authentication conditions are satisfied or not, when a connection request is received from the wireless communication device, a unit relaying the communications by the wireless communication device when the authenticating unit can authenticate the wireless communication device, a unit receiving connection information containing identifying information for identifying an access point relaying the communications by the wireless communication device from another communication device, a unit receiving, from the wireless communication device, the identifying information for identifying the access point relaying the communications by the wireless communication device, and a unit permitting the relay of the communications by the wireless communication device when the identifying information received from the wireless communication device is contained in the connection information received from the another communication device.

## Description

### FIELD

The disclosure relates to a communication device, a connecting destination switchover control method of a wireless communication device by the communication device, and a program.

### BACKGROUND

A wireless LAN (Local Area Network) is characterized by a general-purpose and a low cost of a system thereof. Further, the wireless LAN, which includes a terminal called a wireless LAN access point (which will hereinafter be simply referred to as the access point) of which an installation position is flexible, therefore shows a progress in its spread as a communication system for a mobile terminal. Normally, in the case of administering the wireless LAN in a way that sets the mobile terminal as a wireless LAN client (which will hereinafter be simply termed the client) in an area having broadness to some extent, a plurality of access points is installed. Further, the same SSID (Service Set Identifier) is used for the respective access points. Then, when the client physically moves, a connecting destination of the client is properly switched over to the access point optimal to the connection, thus keeping a quality of communications. This type of operation is called roaming.

when the client performs roaming, the client generates a list of connectable access points on the basis of SSIDs and BSSIDs (Basic Service Set IDs) contained in the packets transmitted from the access points. The packet transmitted from the access points is a beacon packet periodically sent from the access point or a probe response packet sent from the access point by way of a response packet to a probe request packet sent by the client. Then, the client connects with the access point determined to be optimal to the connection from within the connectable access points.
[Patent document 1] Japanese Patent Laid-Open Publication No.H11-317747

### SUMMARY

Conventionally, in a case where the client switches over the connecting destination access point, the BSSID of the connecting source access point is different from the BSSID of the connecting destination access point, and hence a connection process specified by the standard is carried out for the switchover destination access point. In this case, the switchover destination access point and the client are disabled from performing the communications unless the connection process is completed. In applications of streaming and IP telephony of which a real-time characteristic of the communications is demanded, a possibility is that a quality of a content might decline and an interruption of the communications might occur.

It is an object of the disclosure to reduce a decline of a quality of communications and occurrence of an interruption of the communications, which are caused when a client switches over an access point.

The disclosure adopts the following means in order to solve the problems given above. Namely, according to the disclosure, a communication device comprising an authenticating unit authenticating a wireless communication device, depending on whether predetermined authentication conditions are satisfied or not, when a connection request is received from the wireless communication device; a unit relaying the communications by the wireless communication device when the authenticating unit can authenticate the wireless communication device, a unit receiving connection information containing identifying information for identifying an access point relaying the communications by the wireless communication device from another communication device; a unit receiving, from the wireless communication device, the identifying information for identifying the access point relaying the communications by the wireless communication device; and a unit permitting the relay of the communications by the wireless communication device when the identifying information received from the wireless communication device is contained in the connection information received from another communication device.

According to the communication device of the disclosure, when the connection information provided by another communication device contains the identifying information for identifying the access point relaying the communications by the wireless communication device upon receiving a connection request from the wireless communication device, which is received from the wireless communication device, the determination as to whether the predetermined authenticating conditions are satisfied or not is omitted. It is therefore feasible to relay the communications by the wireless communication device at a high speed when receiving the connection request from the wireless communication device.

Further, in the communication device of the disclosure, a value different for every the wireless communication device of which the communications are relayed may be set in the identifying information for identifying the access point relaying the communications by the wireless communication device. According to the communication device of the disclosure, when receiving the connection request from the wireless communication device, the permission of the communications by the wireless communication device can be limited to a specified wireless communication device.

The communication device according to the disclosure may further comprise: a unit transmitting a query about a status of another communication device to another communication device; a unit receiving a response containing status information representing the status of another communication device from another communication device in response to the query; a determining unit determining another communication device relaying the communications by the wireless communication device on the basis of the status information contained in the response; and a unit transmitting the connection information to another communication device determined. According to the communication device of the disclosure, another communication device relaying the communications by the wireless communication device can be determined based on the status information showing the status in another communication device.

In the communication device according to the disclosure, the status information may contain an intensity of a reception signal sent from the wireless communication device in another communication device, and the determining unit may determine another communication device exhibiting an optimal intensity of the reception signal to be another communication device relaying the communications by the wireless communication device. According to the communication device of the disclosure, another communication device relaying the communications by the wireless communication device can be determined based on the intensity of the reception signal sent from the wireless communication device in another communication device.

Further, the disclosure may also be a method by which a computer, other devices, machines, etc execute any one of the processes described above. Still further, the disclosure may also be a program for making the computer, other devices, machines, etc realize any one of the functions described above. Yet further, the disclosure may also be a recording medium recorded with such a program, which can be read by the computer etc.

According to the present invention, it is possible to reduce the decline of the quality of the communications and the occurrence of the interruption of the communications, which are caused when the client switches over the access point.

### BRIEF DESCRIPTION OF THE DRAWINGS

FIG. 1 is a diagram showing an example of a network configuration of a communication system according to an embodiment.
FIG.2 is a block diagram showing a configuration of an access point in the embodiment.
FIG.3 is a function block diagram showing functions of the access point in the embodiment.
FIG.4 is a diagram showing a structure of a packet used in the communication system according to the embodiment.
FIG.5 is a flowchart showing processes till a connection between a client and the access point is established.
FIG.6 is a flowchart showing processes till the connection between the client and another access point is established.
FIG.7 is a flowchart showing an operational example of a moving source access point.
FIG.8 is a flowchart showing an operational example of another access point defined as a moving destination.

### DESCRIPTION OF THE REFERENCE NUMERALS AND SYMBOLS

- A, B, D: access point
- a, b, e: client
- 1: random access memory (RAM)
- 2: central processing unit (CPU)
- 3: flash read only memory (Flash ROM)
- 4: wired LAN interface unit
- 5: wireless LAN interface unit
- 6: power unit
- 7: baseband processor
- 8: transceiver
- 9: power amplifier
- 10: antenna
- 11: control unit
- 12: receiving unit
- 13: transmitting unit
- 14: authenticating unit
- 15: relaying unit
- 16: measuring unit
- 17: registering unit
- 18: determining unit
- 19: deciding unit
- 101: Ethernet (registered trademark) header
- 102: IP (Internet Protocol) header
- 103: UDP (User Datagram Protocol) header
- 104: data field

### DETAILED DESCRIPTION

A wireless device according to a best mode (which will hereinafter be termed an embodiment) for carrying out the disclosure will hereinafter be described with reference to the drawings. A configuration in the following embodiment is an exemplification, and the disclosure is not limited to the configuration in the embodiment.

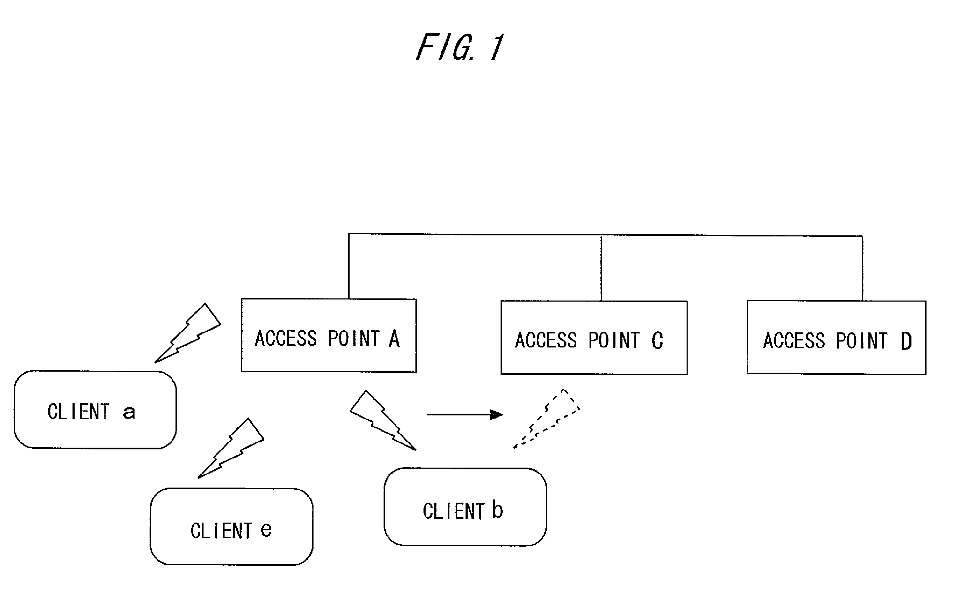

A system according to the embodiment will be described based on drawings in FIGS. 1 through 8. A communication system according to the embodiment is configured by a plurality of access points (each corresponding to a communication device) and a plurality of clients (each corresponding to a wireless communication device). Each access point has a unique MAC (Media Access Control) address (which will hereinafter be termed a wired MAC address) used in a wired LAN (Local Area Network). Further, an SSID and a BSSID can be set in each access point. The SSID is used for determining whether the client can be connected to the access point or not. The BSSID is employed for identifying the access point that relays communications of the client. The BSSID corresponds to identifying information for identifying an access point relaying communications by a wireless communication device.

The access points are connected to each other via a LAN cable. The communications between the access points are performed via the LAN cable. A communication network establishing the connection between the access points can include using, e.g., the Internet and Ethernet (registered trademark). The communication network establishing the connection between the access points is referred to as a subnetwork.

FIG. 1 is a diagram showing an example of a network configuration of the communication system according to the embodiment. In FIG. 1, the communication system includes access points A, C, D connected to each other via the LAN cable, and clients a, b, e. In FIG. 1, the clients a, *b,* e are connected to the access point A. Namely, the access point A relays the communications with the clients a, b, e.

The communication system switches over, based on determination made on the side of the access point, the client connected to the access point to another access point. The example in FIG. 1 shows how the client b connected to the access point A is switched over to the access point C.

<Client> The client has a unique MAC address (which will hereinafter be termed a wireless MAC address) used in a wireless LAN. The wireless MAC address enables the access point to identify each client.

The client, when performing the communications with the access point through the wireless LAN, transmits a probe request packet containing the SSID and the wireless MAC address of the client. In this case, the client transmits, to the access point, the probe request packet at predetermined time intervals by use of an unillustrated timer provided in the self-client. Further, a storage device etc included in the client is previously registered with the SSID set in the access point by installing the SSID from a storage medium or inputting the SSID from a user.

The client, when performing the communications via the wireless LAN, receives a beacon packet periodically transmitted from the access point. Then, the client receives a probe response packet transmitted from the access point receiving the probe request packet. Each of the beacon packet and the probe response packet contains the SSID and the BSSID.

The client, when receiving the beacon packets and the probe response packets from the plurality of access points, specifies the access point transmitting the strongest signal to the client on the basis of signal intensities of each beacon packet and of each probe response packet. Then, the client starts a connection process with respect to the access point by use of the SSID and the BSSID contained in the beacon packet or the probe response packet received from the specified access point.

The client executes the connection process in the way which follows. To begin with, the client sends an authentication request packet to the access point. Then, the client receives an authentication response packet transmitted by the access point receiving the authentication request packet.

Next, the client transmits an association request packet to the access point transmitting the authentication response packet. Further, the client receives an association response packet transmitted by the access point receiving the association request packet.

Thus, the client completes the connection process with the access point. The client, after completing the connection process with the access point, performs data communications with the access point by employing the BSSID contained in the beacon packet or the probe response packet received from the access point. The data communications with the access point are performed in a way that includes, in the transmission data packet, the BSSID contained in the beacon packet or the probe response packet received from the access point.

In the way described above, the client can complete the connection process with the access point capable of relaying the data communications. On the client side, the access point defined as a physical connecting destination has been switched over, and nevertheless there is no change in the BSSID used for the connection. As a result, the client side can omit the normal connection process when switching over the access point.

<Access Point> A plurality of BSSIDs for the wireless LAN communications is set in the access point. Normally, the BSSID includes using the wireless MAC address of a wireless interface of the access point, however, a plurality of addresses different from the wireless MAC address is used.

The access point periodically transmits the beacon packet in order to notify the client of existence of the access point itself. In this case, each of the plural BSSIDs set in the access point is contained in the beacon packet. To be specific, the beacon packets each contained one of the plural BSSIDs set in the access point are prepared by a count corresponding to the number of the BSSIDs set in the access point. Thus, a scheme is that all of the BSSIDs set in the access point are recognized from the client.

The access point receives the probe request packet for querying about the existence of the access point from the client. Then, the access point gives a response to the query of the client about the existence of the access point by transmitting the probe response packet to the client. In this case, a value of the BSSID contained in the probe response packet takes one of the plural BSSIDs set in the access point.

«Connection Process» The access point receives the authentication request packet transmitted by the client receiving the beacon packet or the probe response packet. Then, the access point sends the authentication response packet to the client transmitting the authentication request packet.

Next, the access point receives the association request packet transmitted by the client receiving the authentication response packet. Further, the access point sends the authentication response packet to the client transmitting the association request packet. In the way described above, the access point completes the connection process with the client.

«Measuring Process» The access point makes measurement in terms of radio waves as to which position each of the clients connecting with the self access point exists in. The measurement includes using the intensity of the reception signals of the radio waves transmitted from the clients connected to the self access point. In this case, the access point determines, if the reception signals of the radio waves from the client show the high intensity, that the client exists nearby in terms of the radio waves, and determines, if the reception signals of the radio waves from the client show the low intensity, that the client exists remotely in terms of the radio waves.

The access point makes the measurement in terms of the radio waves at intervals of a fixed period of time as to which position the client connecting with the self access point exists in away from other access points. The following is a description of the measurement made by the access point.

To start with, the access point broadcasts a query packet containing the wireless MAC address of the client connecting with the self access point to within the subnetwork. In this case, if there exists the plurality of clients connecting with the self access point, the access point gets the wireless MAC address of one of the clients contained in the query packet. Herein, the client specified by the wireless MAC address contained in the query packet is referred to as a moving target client. For example, in the case of FIG. 1, the access point A broadcasts the query packet containing the wireless MAC address of the client *b*.

Then, another access point receives the query packet. Another access point receiving the query packet measures the intensity of the reception signals of the radio waves from the moving target client of which the MAC address is contained in the query packet. For instance, in the case of FIG. 1, the access point C measures the intensity of the reception signals of the radio waves from the client b.

Another access point embeds the intensity of the reception signals of the radio waves from the moving target client, which is measured by the self access point, into a reply packet. Another access point sends the reply packet to the access point transmitting the query packet. The access point receives the reply packet from another access point.

The access point receiving the reply packet from another access point extracts the intensity of the reception signals contained in the reply packet. Then, the access point measures, based on the extracted intensity of the reception signals, which position the moving target client exists in away from another access point in terms of the radio waves.

In the way described above, the access point measures the positional relation in terms of the radio waves between the client connecting with the self access point and another access point. If there exists the plurality of clients connecting with the self access point, the access point measures the positional relation in terms of the radio waves between each client and another access point.

«Connection Process with Another Access Point» A process of connecting the moving target client to another access point will be explained. The process of connecting the moving target client to another access point is executed when there exists another access point closer in terms of the radio waves than the access point to which the moving target client is connected.

At first, the access point compares the intensity of the reception signals of the radio waves from the moving target client with the intensity of the reception signals, which is embedded in the received reply packet.

If the intensity of the reception signals, which is embedded in the received reply packet, is higher than the intensity of the reception signals of the radio waves from the moving target client, the access point determines another access point transmitting the reply packet containing the higher intensity of the reception signals.

Then, the access point transmits, to thus-determined another access point, a moving request packet containing the wireless MAC address of the moving target client, the BSSID used for the connection with the moving target client and the SSID used for the connection with the moving target client. The moving request packet corresponds to connection information containing the identifying information for identifying the communication device relaying the communications by the wireless communication device.

Thus-determined another access point receives the moving request packet. Then, another access point receiving the moving request packet determines whether the moving target client can be accepted or not. The determination as to whether the moving target client can be accepted or not may be made based on, e.g., a client count of the clients connecting with another access point and a magnitude of a load (CPU load, a memory load, etc) of another access point.

When determining that the moving target client can be accepted, another access point transmits an acceptance packet to the access point transmitting the moving request packet. When determining that the moving target client can not be accepted, another access point transmits a rejection packet to the access point transmitting the moving request packet.

The access point receives the rejection packet from another access point. When receiving the rejection packet from another access point, the access point stops the process of connecting the moving target client to another access point.

The access point, after transmitting the moving request packet and if the acceptance packet is not received from another access point within a fixed period of time, stops the process of connecting the moving target client to another access point.

The access point receives the acceptance packet from another access point. In the case of receiving the acceptance packet from another access point, the access point stops using the BSSID employed for the connection with the moving target client. Specifically, the access point stops using the BSSID employed for the connection with the moving target client by executing the following processes (1) through (3).

(1) The access point does not give any response to the packet with a destination specified by the BSSID employed for the connection with the moving target client. (2) The access point stops transmitting the beacon packet into which to embed the BSSID employed for the connection with the moving target client. (3) The access point stops transmitting the probe response packet into which to embed the HSSID employed for the connection with the moving target client.

Another access point, after sending the acceptance packet to the access point transmitting the moving request packet, sets the SSID and the BSSID contained in the moving request packet in the access point itself. Then, another access point performs the data communications with the moving target client on the assumption that the connection process with the moving target client has been completed.

Thus, the access point can connect the moving target client to another access point. Namely, another access point defined as a moving destination receives the moving request packet from the access point defined as a moving source. Another access point sets the SSID and the BSSID contained in the moving request packet in another access point itself. In this case, another access point can assume that the connection process with the client connecting with the moving source access point has been completed.

As a result, another access point, when receiving the data from the moving target client, can relay the data transmitted from the moving target client by omitting the connection process with the moving target client. It is therefore feasible to reduce a decline of a communication quality and occurrence of interruption of the communications, which are caused when the client switches over the access point.

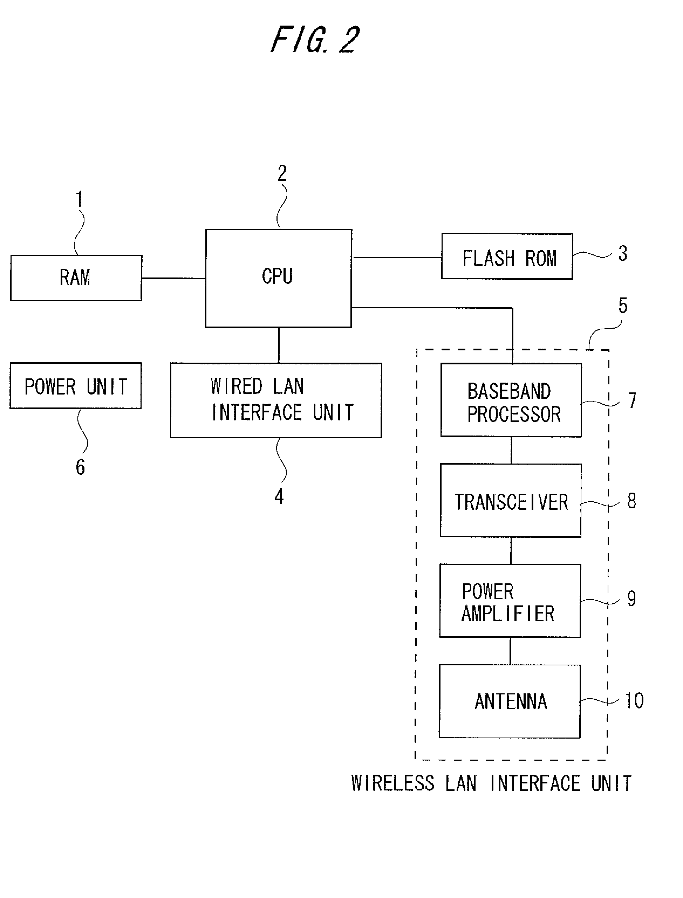

<Configuration of Access Point> FIG. 2 is a block diagram showing a configuration of the access point in the embodiment. In FIG. 2, the access point includes a random access memory (RAM) 1, a central processing unit (CPU) 2, a flash read-only memory (Flash ROM) 3, a wired LAN interface unit 4, a wireless LAN interface unit 5 and a power unit 6. The wireless LAN interface unit 5 has a baseband processor 7, a transceiver 8, a power amplifier 9 and an antenna 10.

The RAM 1 is a storage medium utilized as an operation area when the CPU 2 executes a control program of the wireless LAN.

The CPU 2 executes a program (e.g., firmware, a driver, etc) for controlling the wireless LAN, which is recorded in the flash ROM 3. The CPU 2 utilizes the RAM 1 as a temporary storage medium when executing the program. The CPU 2 includes a timer for measuring a fixed period of time.

The wired LAN interface unit 4 is connected to another access point via a network cable. The wired LAN interface unit 4 transmits the packet to another access point via the network cable. Further, the wired LAN interface unit 4 receives the packet transmitted by another access point.

The baseband processor 7 converts the signals from the transceiver 8 into a bitstring expressed in 1 and 0, and sends the bitstring to the CPU 2. Further, the baseband processor 7 converts the bitstring received from the CPU 2 into radio signals and transmits the radio signals to the transceiver 8.

The transceiver 8 down-converts the signals received from the antenna 10 and transmits the down-converted signals to the baseband processor 7. Further, the transceiver 8 up-converts the signals received from the baseband processor 7 into carrier-frequency signals and transmits the carrier-frequency signals to the antenna 10.

The power amplifier 9 increases electric power of the signals transmitted to the client. The antenna 10 receives the radio signals from the client. Further, the antenna 10 sends the radio signals to the client.

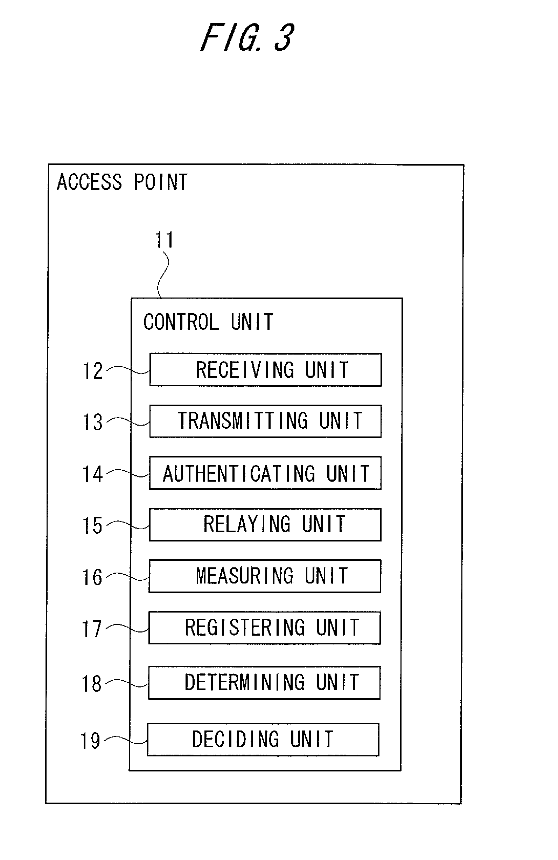

FIG. 3 is a function block diagram showing functions of the access point. In FIG. 3, the access point includes a control unit 11. The control unit 11 is constructed of the RAM 1, the CPU 2, etc, and includes a receiving unit 12, a transmitting unit 13, an authenticating unit 14, a relaying unit 15, a measuring unit 16, a registering unit 17, a determining unit 18 and a deciding unit 19.

The receiving unit 12 receives the probe request packet, the authentication request packet, the association request packet and the data packet via the wireless LAN interface unit 5. The receiving unit 12 receives the query packet, the reply packet, the moving request packet, the acceptance packet and the data packet via the wired LAN interface unit 4.

The transmitting unit 13 transmits the probe response packet, the authentication response packet, the association response packet and the data packet via the wireless LAN interface unit 5.

The transmitting unit 13 broadcasts the query packet to within the subnetwork via the wired LAN interface unit 4. The transmitting unit 13 transmits the reply packet, the moving request packet, the acceptance packet and the data packet via the wired LAN interface unit 4.

The transmitting unit 13, when the receiving unit 12 receives the acceptance packet from another access point, stops the response to the packet with the destination specified by the BSSID employed for the connection the moving target client.

The transmitting unit 13, when the receiving unit 12 receives the acceptance packet from another access point, stops transmitting the beacon packet containing the BSSID employed for the connection with the moving target client.

The transmitting unit 13, when the receiving unit 12 receives the acceptance packet from another access point, stops transmitting the probe response packet containing the BSSID employed for the connection with the moving target client.

The authenticating unit 14 decides whether or not the probe request packet, the authentication request packet and the association request packet received by the receiving unit 12 satisfy predetermined conditions. The predetermined conditions are exemplified by security setting schemes such as WEP (Wired Equivalent Privacy) and WPA (Wi-Fi Protected Access) defined as the standards of the wireless LAN encrypting system.

The relaying unit 15, when the authenticating unit 14 determines that the predetermined conditions are satisfied, transmits the data packet received from the client via the wireless LAN interface unit 5 to the LAN cable via the wired LAN interface unit 4.

The relaying unit 15, when the authenticating unit 14 determines that the predetermined conditions are satisfied, transmits the data packet received via the wired LAN interface unit 4 to the client via the wireless LAN interface unit 5.

The measuring unit 16 measures the intensity of the reception signals of the radio waves sent from the client via the wireless LAN interface unit 5.

The registering unit 17 registers, in the RAM 1, the intensity of the reception signals of the radio waves sent from the client, which has been measured by the measuring unit 16. The measuring unit 16 registers, in the RAM 1, the SSID and the BSSID contained in the moving request packet received by the receiving unit 12.

The determining unit 18 determines whether or not the wired LAN interface unit 4 receives the query packet within the fixed period of time. The determining unit 18 determines whether or not the wired LAN interface unit 4 receives the reply packet within the fixed period of time. The determining unit 18 determines whether or not the wired LAN interface unit 4 receives the moving request packet within the fixed period of time. The determining unit 18 determines whether or not the wired LAN interface unit 4 receives the acceptance packet within the fixed period of time.

The determining unit 18 determines whether the moving target client can be accepted or not. When the determining unit 18 determines that the moving target client can be accepted, the transmitting unit 13 transmits the acceptance packet via the wired LAN interface unit 4.

The deciding unit 19 compares the intensity of the reception signals of the radio waves sent from the moving target client with the intensity of the reception signals, which is embedded into the received reply packet. The deciding unit 19, if the intensity of the reception signals, which is embedded into the received reply packet, is higher than the intensity of the reception signals of the radio waves, decides another access point transmitting the reply packet containing the higher intensity of the reception signals.

<Packet> In-depth descriptions of the query packet, the reply packet, the moving request packet and the acceptance packet used in the communication system will be made.

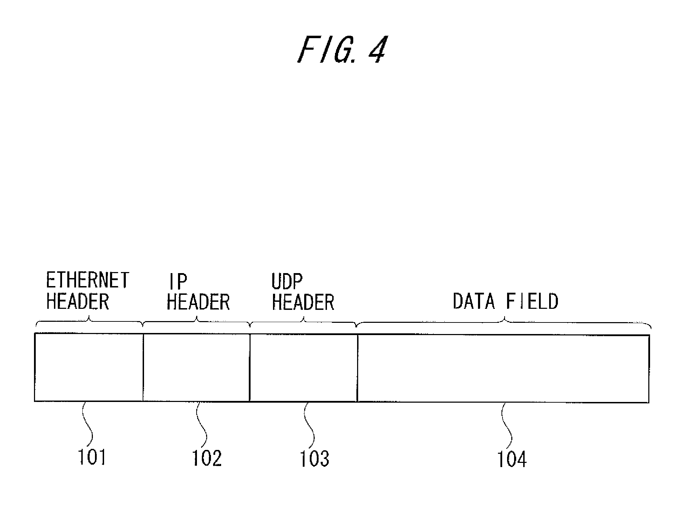

FIG. 4 shows a frame format of the packet applied to the query packet, the reply packet, the moving request packet and the acceptance packet. Each of the query packet, the reply packet, the moving request packet and the acceptance packet has an Ethernet (registered trademark) header 101 (which will hereafter be termed a LAN header 101), an IP (Internet Protocol) header 102, a UDP (User Datagram Protocol) header 103, and a data field 104.

The LAN header 101, the IP header 102 and the data field 104 hold items of information depending on the query packet, the reply packet, the moving request packet and the acceptance packet. The UDP header 103 holds common information that does not depend on differences between types of the packets and between the access points.

The UDP header 103 contains a transmission source port number and a transmission destination port number. The port number is employed for executing the program provided in the access point. Both of the transmission source port number and the transmission destination port number take a certain determined value (e.g., 6350) but depend on neither the packet type nor the access point. Further, the transmission source port number and the transmission destination port number may take different values.

<Query Packet> The query packet is a packet for broadcasting the wireless MAC address information of the client to within the subnetwork.

The LAN header 101 contains the wired MAC address of a transmission source access point and the wired MAC address for broadcasting. The IP header 102 contains the IP address of the transmission source access point and the IP address for broadcasting, which depends on the network address.

The data field 104 includes an identifier for identifying the query packet and the wireless MAC address of the moving target client. For example, if the identifier is determined as a character string "Request", the data field 104 becomes a hexadecimal data string organized by "52 65 71 75 65 73 74" and the wireless MAC address ("Request" + the wireless MAC address) of the moving target client.

<Reply Packet> The reply packet is a packet transmitted to the access point which transmits the query packet after the access point has received the query packet.

The LAN header 101 contains the wired MAC address of the transmission source access point and the wired MAC address of the transmission destination access point (which is the inquirer access point contained in the query packet). The IP header 102 contains the IP address of the transmission source access point and the IP address of the transmission destination access point (which is the inquirer access point contained in the query packet).

The data field 104 organized by the identifier which identifies the reply packet and the intensity of the reception signal of the radio wave sent from the moving target client. For instance, if the identifier is determined as a character string "Response", the data field 104 becomes a hexadecimal data string organized by "52 65 73 70 6f 6e 73 65" and a hexadecimal notation ("Response" + the hexadecimal notation of a numerical value of the intensity of the reception signal) of the numerical value of the intensity of the reception signal.

<Moving Request Packet> The moving request packet is a packet to be transmitted if there exists another access point closer in terms of the radio waves than the access point to which the moving target client is connected.

The LAN header 101 contains the wired MAC address of the transmission source access point and the wired MAC address of the transmission destination access point. The IP header 102 contains the IP address of the transmission source access point and the IP address of the transmission destination access point.

The data field 104 is organized by the identifier which identifies the moving request packet, the wireless MAC address of the moving target client, the BSSID employed for the connection with the moving target client, and the SSID employed for the connection with the moving target client. For example, if the identifier is determined as a character string "Move", the data field 104 becomes a hexadecimal data string organized by "4D 6F 76 65" + the wireless MAC address of the moving target client + BSSID + SSID ("Move" + the wireless MAC address + BSSID + SSID).
<Acceptance Packet> The acceptance packet is a packet that is transmitted to the access point transmitting the moving request packet if another access point determines that the moving target client can be accepted.

The LAN header 101 contains the wired MAC address of the transmission source access point and the wired MAC address of the transmission destination access point (which is the moving requester access point contained in the moving request packet). The IP header 102 contains the IP address of the transmission source access point and the IP address of the transmission destination access point (which is the moving requester access point contained in the moving request packet) .

The data field 104 is organized by the identifier which identifies the acceptance packet and the wireless MAC address of the moving target client. For example, if the identifier is determined as a character string "Accept", the data field 104 becomes a hexadecimal data string organized by "41 63 63 65 70 74" + the wireless MAC address of the moving target client ("Accept" +the wireless MAC address)).

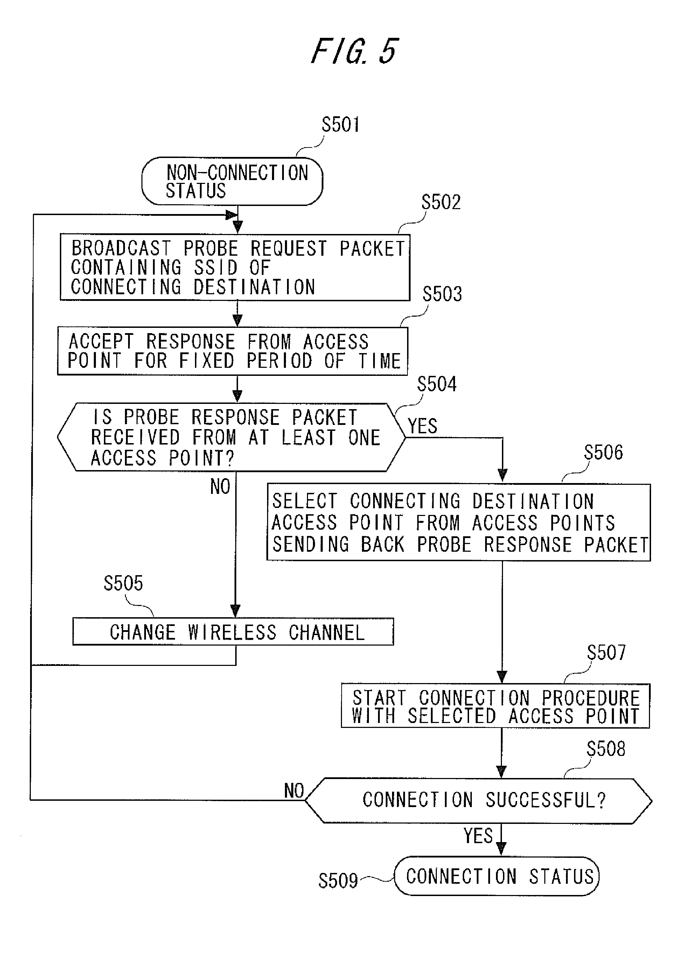

<Operational Example> An operational example of the communication system according to the embodiment will hereinafter be described with reference to flowcharts shown in FIGS. 5 through 8. To begin with, an example of the operation conducted by the client will be explained. Next, an example of the operation performed by the access point will be described.

<Operational Example of Client> FIG. 5 is the flowchart showing processes till the connection between the client and the access point remaining in a non-connection status is established.

At a start point of the processes shown in FIG. 5, the client is in the non-connection status (S501). Next, the client broadcasts the probe request packet containing the SSID of the connecting destination (S502).

The client accepts the response from the access point for a fixed period of time (S503). The client determines whether or not the probe response packet to the probe request packet is received from at least one access point within the fixed period of time (S504).

If the probe response packet to the probe request packet is not received from at least one access point within the fixed period of time, the client changes the wireless channel (S505). The client loops the processing back to S502.

Whereas if the probe response packet to the probe request packet is received from at least one access point within the fixed period of time, the client selects the access point serving as the connecting destination from within the access points sending back the probe response packet (S506).

The client starts the connection process with the selected access point (S507). Then, the client determines whether or not the connection between the client and the access point gets successful (S508).

If the connection between the client and the access point gets unsuccessful, the client loops the processing back to step S502. Whereas if the connection between the client and the access point gets successful, the connection between the client and the access point is established. Namely, the client comes into the connection status with the access point (S509).

When the connection therebetween is established, the client registers, in the storage device etc provided in the client itself, the BSSID contained in the probe response packet received from the access point of which the connection has been established.

Through the processes described above, the client selects the access point becoming the connecting destination from within the access points sending back the probe response packet, and can connect with the selected access point.

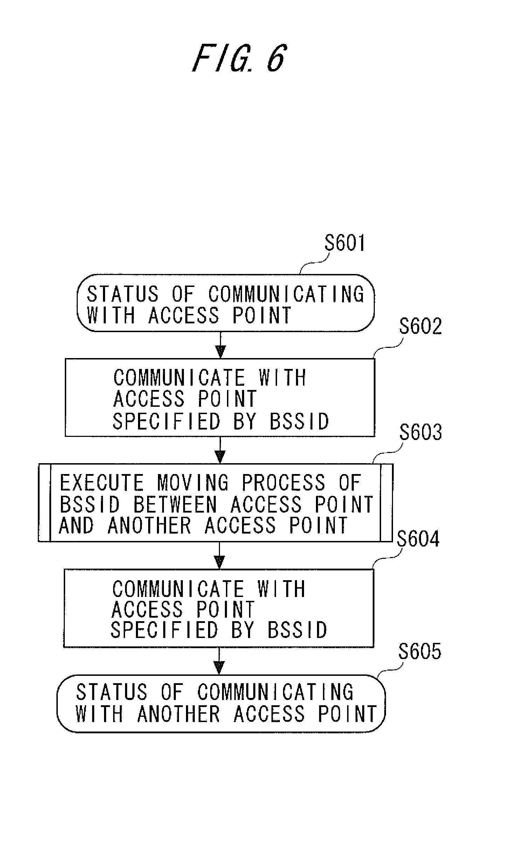

FIG. 6 is the flowchart showing processes till the connection between the client and another access point is established from the status where the connection between the client and the access point has been established.

At a start point of the processes shown in FIG. 6, the client is in a status of performing the communications with the access point (S601). Take the client *b* in FIG. 1 for example, the client b is in the status of performing the communications with the access point A.

Next, the client performs the communications with the access point specified by the BSSID registered in the storage device etc provided in the client (S602). Take the client b in FIG. 1 for example, the client b performs the communications with the access point A.

Then, the access point executes a moving process of the BSSID between another access point and the self access point (S603). In the case of executing the moving process of the BSSID, the BSSID moved to another access point is set in another access point. For instance, in the case of the access point A shown in FIG. 1, the access point A executes the moving process of the BSSID between the access point C and the self access point A. Then, the BSSID moved to the access point C is set in the access point C.

Next, the client performs the communications with the access point specified by the BSSID registered in the storage device etc provided in the client (S604). In the case of carrying out the moving process of the BSSID, the access point specified by the BSSID is another access point. Take the client *b* in FIG. 1 for example, the client b performs the communications with the access point C to which the BSSID is moved.

The client, when performing the communications by use of the BSSID registered in the storage device etc provided in the self client, comes to a status of performing the communications with another access point (S605). Take the client b in FIG. 1 for example, the client b comes to the status of performing the communications with the access point C.

Through the processes described above, the client side can omit the connection process and can switch over the access point. To be specific, the client side can omit the connection process and can switch over the access point that relays the data communications.

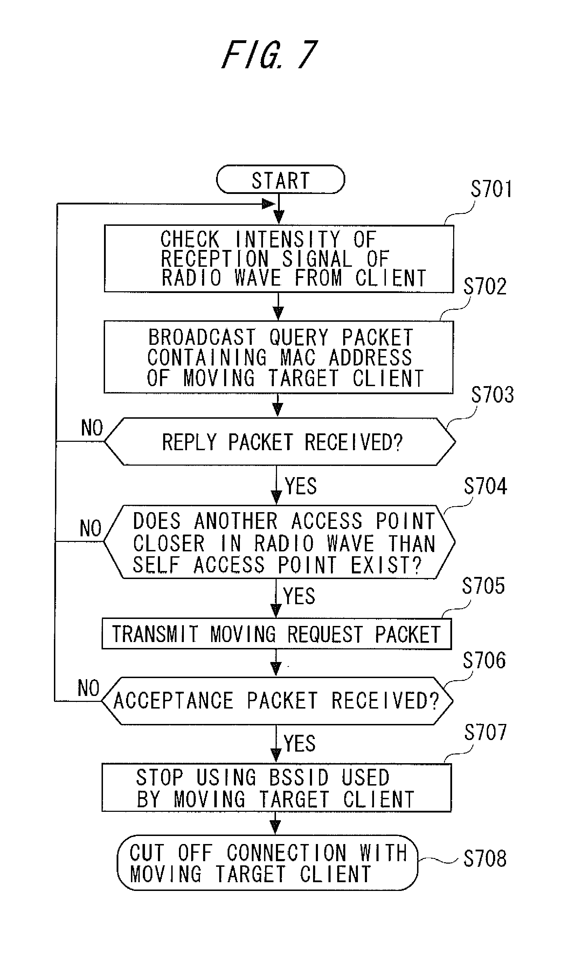

<Operational Example of Access Point> FIG. 7 is the flowchart showing an operational example of the moving source access point. To start with, the access point checks the intensity of the reception signals of the radio waves sent from the client connecting with the self access point (S701). Next, the access point broadcasts the query packet containing the wired MAC address of the moving target client (S702).

Then, the access point determines whether or not the reply packet is received within the fixed period of time (S703). If the access point receives at least one reply packet from another access point within the fixed period of time, the access point determines whether or not there exists another access point closer in terms of the radio waves than the self access point (S704).

Whereas if the access point does not receive at least one reply packet from another access point within the fixed period of time (if determined to be negative in the process in S703), the access point loops the processing back to step S701.

Next, if there exists another access point closer in terms of the radio waves than the self access point (if determined to be affirmative in the process in S704), the access point transmits the moving request packet to another access point closer in terms of the radio waves than the self access point (S705).

Whereas if there exists none of another access point closer in terms of the radio waves than the self access point (if determined to be negative in the process in S704), the access point loops the processing back to step S701.

Then, the access point determines whether or not the acceptance packet is received within the fixed period of time (S706). If the acceptance packet is received within the fixed period of time, the access point stops using the BSSID employed by the moving target client (S707). While on the other hand, if the acceptance packet is not received within the fixed period of time, the access point loops the processing back to step S701.

The access point stops using the BSSID employed by the moving target client, thereby cutting off the connection between the access point and the moving target client (S708).

Through the processes described above, the access point can cut off the connection with the moving target client. Then, the access point can notify another access point of the existence of the moving target client. Further, the access point can notify another access point of the BSSID used for the data communications by the moving target client.

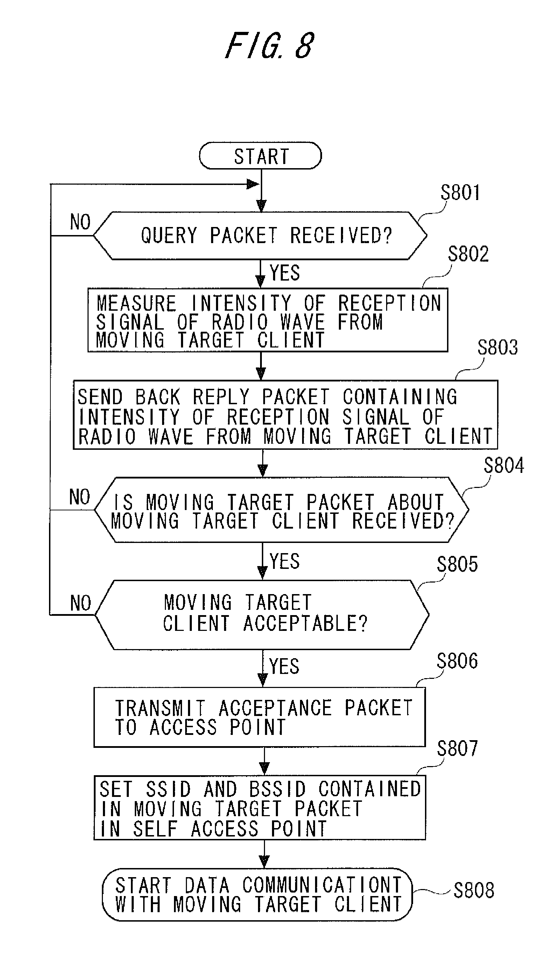

FIG. 8 is the flowchart showing an operational example of another access point defined as the moving destination. At first, another access point determines whether or not the query packet is received within the fixed period of time (S801).

If the query packet is received within the fixed period of time, another access point measures the intensity of the reception signals of the radio waves sent from the moving target client (S802). Whereas if the query packet is not received, another access point loops the processing back to step S801.

Next, another access point transmits the reply packet containing the measured intensity of the reception signals of the radio waves sent from the moving target client back to the access point (S803). Then, another access point determines whether or not the moving request packet about the moving target client is received within the fixed period of time (S804).

If the moving request packet about the moving target client is received within the fixed period of time, another access point determines whether the moving target client can be accepted or not (S805).

Whereas if the moving request packet about the moving target client is not received within the fixed period of time (if determined to be negative in the process in S804), another access point loops the processing back to step S801.

Next, if another access point can accept the moving target client (if determined to be affirmative in the process in S805), another access point transmits the acceptance packet to the access point (S806).

While on the other hand, if another access point can not accept the moving target client (if determined to be negative in the process in S805), another access point loops the processing back to step S801.

Then, another access point sets the SSID and the BSSID contained in the moving request packet in the self access point (S807).

Another access point starts the data communications with the moving target client on the assumption that the connection process with the moving target client have been completed (S808).

Through the processes described above, another access point, when receiving the data from the moving target client, can omit the connection process with the moving target client and can relay the data transmitted from the moving target client. It is therefore feasible to reduce the decline of the communication quality and the occurrence of the interruption of the communications, which are caused when the client switches over the access point.

<Readable-by-Computer Recording Medium> A program for realizing any one of the functions can be recorded on a readable-by-computer recording medium. Then, the computer reads and executes the program on this recording medium, whereby the function can be provided. Herein, the readable-by-computer recording medium connotes a recording medium capable of storing information such as data and programs electrically, magnetically, optically, mechanically or by chemical action, which can be read from the computer. Among these recording mediums, for example, a flexible disc, a magneto-optic disc, a CD-ROM, a CD-R/W, a DVD, a DAT, an 8 mm tape, a memory card, etc. are given as those demountable from the computer. Further, a hard disc, a ROM (Read-Only Memory), etc are given as the recording mediums fixed within the computer.

## Claims

1. A communication device comprising:
an authenticating unit authenticating a wireless communication device, depending on whether predetermined authentication conditions are satisfied or not, when a connection request is received from the wireless communication device;
a unit relaying the communications by the wireless communication device when the authenticating unit can authenticate the wireless communication device;
a unit receiving connection information containing identifying information for identifying an access point relaying the communications by the wireless communication device from another communication device;
a unit receiving, from the wireless communication device, the identifying information for identifying the access point relaying the communications by the wireless communication device; and
a unit permitting the relay of the communications by the wireless communication device when the identifying information received from the wireless communication device is contained in the connection information received from the another communication device.

2. The communication device according to claim 1, wherein a value different for every the wireless communication device of which the communications are relayed is set in the identifying information for identifying the access point relaying the communications by the wireless communication device.

3. The communication device according to claim 1, further comprising:
a unit transmitting a query about a status of the another communication device to the another communication device;
a unit receiving a response containing status information representing the status of the another communication device from the another communication device in response to the query;
a determining unit determining the another communication device relaying the communications by the wireless communication device on the basis of the status information contained in the response; and
a unit transmitting the connection information to the another communication device determined.

4. The communication device according to claim 3, wherein the status information contains an intensity of a reception signal sent from the wireless communication device in the another communication device, and
the determining unit determines another communication device exhibiting an optimal intensity of the reception signal to be the another communication device relaying the communications by the wireless communication device.

5. The control method of a communication device, comprising:
an authenticating step of authenticating a wireless communication device, depending on whether predetermined authentication conditions are satisfied or not, when a connection request is received from the wireless communication device;
a step of relaying the communications by the wireless communication device when the wireless communication device can be authenticated in the authenticating step;
a step of receiving connection information containing identifying information for identifying an access point relaying the communications by the wireless communication device from another communication device;
a step of receiving, from the wireless communication device, the identifying information for identifying the access point relaying the communications by the wireless communication device; and
a step of permitting the relay of the communications by the wireless communication device when the identifying information received from the wireless communication device is contained in the connection information received from the another communication device.

6. The control method of a communication device according to claim 5, wherein a value different for every the wireless communication device of which the communications are relayed is set in the identifying information for identifying the access point relaying the communications by the wireless communication device.

7. The control method of a communication device according to claim 5, further comprising:
a step of transmitting a query about a status of the another communication device to the another communication device;
a step of receiving a response containing status information representing the status of the another communication device from the another communication device in response to the query;
a determining step of determining the another communication device relaying the communications by the wireless communication device on the basis of the status information contained in the response; and
a step of transmitting the connection information to the another communication device determined.

8. The control method of a communication device according to claim 7, wherein the status information contains an intensity of a reception signal sent from the wireless communication device in the another communication device, and
the determining step includes determining another communication device exhibiting an optimal intensity of the reception signal to be the another communication device relaying the communications by the wireless communication device.

9. A communication device control program executed by a computer, the communication device control program comprising:
an authenticating step of authenticating a wireless communication device, depending on whether predetermined authentication conditions are satisfied or not, when a connection request is received from the wireless communication device;
a step of relaying the communications by the wireless communication device when the wireless communication device can be authenticated in the authenticating step;
a step of receiving connection information containing identifying information for identifying an access point relaying the communications by the wireless communication device from another communication device;
a step of receiving, from the wireless communication device, the identifying information for identifying the access point relaying the communications by the wireless communication device; and
a step of permitting the relay of the communications by the wireless communication device when the identifying information received from the wireless communication device is contained in the connection information received from the another communication device.

10. The communication device control program according to claim 9, wherein a value different for every the wireless communication device of which the communications are relayed is set in the identifying information for identifying the access point relaying the communications by the wireless communication device.

11. The communication device control program according to claim 9, further comprising:
a step of transmitting a query about a status of the another communication device to the another communication device;
a step of receiving a response containing status information representing the status of the another communication device from the another communication device in response to the query;
a determining step of determining the another communication device relaying the communications by the wireless communication device on the basis of the status information contained in the response; and
a step of transmitting the connection information to the another communication device determined.

12. The communication device control program according to claim 11, wherein the status information contains an intensity of a reception signal sent from the wireless communication device in the another communication device, and
the determining step includes determining another communication device exhibiting an optimal intensity of the reception signal to be the another communication device relaying the communications by the wireless communication device.
